# EUROPÄISCHE PATENTANMELDUNG

(11) **EP 1 422 105 A2**
(43) Veröffentlichungstag der Anmeldung: **26.05.2004**
(21) Anmeldenummer: 03024650.8
(22) Anmeldetag: 27.10.2003
(51) Int. Cl.: B60N 3/10

(54) **Haltevorrichtung zum lösbaren Halten von Gegenständen**

(30) Priorität: 21.11.2002 DE 20218006 U
(71) Anmelder: REUM GmbH & Co. Betriebs KG, 74736 Hardheim (DE)
(72) Erfinder: Müller, Robert, 74722 Buchen (DE)
(74) Vertreter: Maser, Jochen, Dipl.-Ing.

(57) **Zusammenfassung**

Die Erfindung betrifft eine Haltevorrichtung (10) zum lösbaren Halten von Gegenständen (16), insbesondere Cupholder für Fahrzeuginnenräume, mit einer Basiseinrichtung (12), auf der der Gegenstand (16) abstellbar ist, und einer Fixiereinrichtung (14), die den auf der Basiseinrichtung (12) abgestellten Gegenstand (16) in dessen unteren Bereich lösbar fixiert, indem zumindest bereichsweise eine Innenkontur der Fixiereinrichtung (14) vorhanden ist, die an der Außenkontur des Gegenstands (16) anliegt, wobei die Fixiereinrichtung (14) eine elastische Einheit (15) aufweist, die von einem gespannten Zustand in einen entspannten Zustand überführbar ist, wobei die Fixierhöhe (H2) und damit die Anlagefläche der Fixiereinrichtung (14) an den eingesetzten Gegenstand (16) im entspannten Zustand der Fixiereinrichtung (14) größer ist als die Höhe der Fixiereinrichtung (14) im gespannten Zustand.

## Beschreibung

### TECHNISCHES GEBIET

Die vorliegende Erfindung betrifft eine Haltevorrichtung zum lösbaren Halten von Gegenständen, insbesondere Cupholder für Fahrzeuginnenräume, mit einer Basiseinrichtung auf der der Gegenstand abstellbar ist, und einer Fixiereinrichtung, die den auf der Basiseinrichtung abgestellten Gegenstand in dessen unteren Bereich lösbar fixiert, indem zumindest bereichsweise eine Innenkontur der Fixiereinrichtung vorhanden ist, die an der Außenkontur des Gegenstands anliegt.

### STAND DER TECHNIK

Es sind Haltevorrichtungen, insbesondere Cupholder für Fahrzeuginnenräume bekannt, die bewegliche Teile beziehungsweise Führungen zur sicheren Fixierung von eingesetzten Gegenständen aufweisen. Die verwendeten Bauteile bilden ein kinematisches System, durch dessen Bewegung ein erhöhter Haltepunkt im Vergleich zu flachen, starren Cupholdern ermöglicht wird, wobei insgesamt eine bessere Haltewirkung erzielt wird. Durch Einsatz mehrere beweglicher Bauteile sind diese Systeme jedoch relativ störanfällig. Des Weiteren ist ein hoher Aufwand in Entwicklung und Produktion erforderlich.

### DARSTELLUNG DER ERFINDUNG

Ausgehend von dem genannten Stand der Technik liegt der vorliegenden Erfindung die Aufgabe beziehungsweise das technische Problem zugrunde, eine Haltevorrichtung der eingangs genannten Art anzugeben, die eine sichere lösbare Fixierung eines eingesetzten Gegenstands gewährleistet, die wirtschaftlich hergestellt werden kann und die eine geringe Störanfälligkeit aufweist.

Die erfindungsgemäße Haltevorrichtung ist durch die Merkmale des unabhängigen Anspruchs 1 gegeben. Vorteilhafte Ausgestaltungen und Weiterbildungen sind Gegenstand der von Anspruch 1 direkt oder indirekt abhängigen Ansprüche.

Die erfindungsgemäße Haltevorrichtung ist demgemäß dadurch gekennzeichnet, dass die Fixiereinrichtung eine elastische Einheit aufweist, die von einem gespannten Zustand in einen entspannten Zustand überführbar ist, wobei die Fixierhöhe und damit die Anlagefläche der Fixiereinrichtung an den eingesetzten Gegenstand im entspannten Zustand der Fixiereinrichtung größer ist als die Höhe der Fixiereinrichtung im gespannten Zustand.

Eine besonders bevorzugte Ausgestaltung der erfindungsgemäßen Haltevorrichtung zeichnet sich dadurch aus, dass die elastische Einheit als Schaumstoffkörper ausgebildet ist. Alternativ kann die elastische Einheit aus elastischem Thermoplast-Material bestehen. Es ist weiterhin möglich, die elastische Einheit als Faltenbalg oder Lamellenkörper auszubilden.

Ein kompakter Aufbau, der eine zuverlässige lösbare Fixierung gewährleistet und konstruktiv einfach umzusetzen ist, zeichnet sich gemäß einer besonders vorteilhafter Ausgestaltung dadurch aus, dass die elastische Einheit als Ringkörper ausgebildet sein kann.

Die erfindungsgemäße Haltevorrichtung kann kostengünstig hergestellt werden, da auf aufwendig herzustellende und zu montierende Einzelteile im Rahmen eines kinematischen Systems gemäß dem Stand der Technik verzichtet werden kann. Dadurch wird die Störanfälligkeit drastisch reduziert. Die bei bekannten Systemen eingesetzten Dämfungsräder werden durch die werkstoffbedingte gedämpfte Rückstellung der elastischen Einheit ersetzt. Sind keine Federn oder sonstige mechanische Verbindungselemente erforderlich, was sich insgesamt positiv auf eine wirtschaftliche Herstellung der Haltevorrichtung auswirkt.

Eine besonders bevorzugte Ausgestaltung zeichnet sich dadurch aus, dass Mittel zum lösbaren Arretieren der Fixiereinrichtung im gespannten Zustand vorhanden sind, wodurch die Haltevorrichtung in diesem Zustand ein kompaktes, raumsparendes Einbauvolumen einnimmt. Eine konstruktive Umsetzung der Mittel zum lösbaren Arretieren kann das Vorsehen eines Drehriegels sein.

Es ist auch möglich die Mittel als sogenannte Push-Push-Verriegelung auszubilden, das heißt das Arretiren oder Lösen erfolgt durch manuellen Druck auf entsprechende Verriegelungselemente.

In einer konstruktiv besonders einfachen vorteilhaften Ausgestaltung sind die Mittel zum lösbaren Arretieren als Klettverschluss ausgebildet.

Gemäß einer vorteilhaften Ausführungsvariante sind Anschlagmittel vorhanden, die die Fixierhöhe im entspannten Zustand der Fixiereinrichtung begrenzen.

Eine konstruktive besonders einfache und wirtschaftlich herzustellende Ausführungsvariante ist dadurch gekennzeichnet, dass die Fixiereinrichtung ein im Querschnitt U-förmiges Aufnahmeprofil mit einem nach unten weisenden Außen- und Innenflansch aufweist und die elastische Einheit im gespannten Zustand im Wesentlichen vollständig im Inneren des U-förmigen Aufnahmeprofils vorhanden ist. Dabei kann es gemäß einer weiteren bevorzugten Ausgestaltung vorteilhaft sein, die Haltevorrichtung so auszubilden, dass das Aufnahmeprofil an seinem Außenflansch in dessen unteren freien Endbereich einen nach außen weisende Vorsprungeinheit aufweist, die mit einem an der Basiseinrichtung vorhandenen Innenvorsprungeinheit im entspannten Zustand der elastischen Einheit zur Begrenzung der Fixierhöhe zum Anschlag kommt.

Eine vorteilhafte Ausgestaltung zeichnet sich dadurch aus, dass die Basiseinrichtung einen U-förmigen Querschnitt mit einem nach oben weisenden Basisflansch aufweist und im oberen Endbereich des Basisflansches eine Innenvorsprungeinheit angeordnet ist.

Gemäß einem besonders bevorzugten Ausführungsbeispiel, das eine besonders wirtschaftliche Herstellung der Haltevorrichtung gewährleistet; ist das Aufnahmeprofil und die Basiseinheit als Kunststoffspritzteil ausgebildet, wobei sowohl die Außenvorsprüngseinheit als auch die Innenvorsprungseinheit als einstückig angespritzte Bauteile ausgebildet sind.

Es ist einer vorteilhaften Weiterbildung auch problemlos möglich das 2-Komponenten-Spritzgussverfahren zur Herstellung des Aufnahmeprofils mit elastischer Einheit einzusetzen.

Weitere Ausführungsformen und Vorteile der Erfindung ergeben sich durch die in den Ansprüchen ferner aufgeführten Merkmale sowie durch das nachstehend angegebene Ausführungsbeispiel. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand des in der Zeichnung dargestellten Beispiels näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Perspektivdarstellung einer Haltevorrichtung mit einer Basiseinrichtung und einer Fixiereinrichtung, die eine elastische Einheit aufweist, mit einem eingesetzten, lösbar fixierten Gegenstand,
- Fig. 2: schematischer Querschnitt durch die Haltevorrichtung gemäß Fig. 1 (Fixiereinrichtung im entspannten Zustand),
- Fig. 3: schematischer Querschnitt durch die Haltevorrichtung gemäß Fig. 2, wobei sich die Fixiereinrichtung im gespannten Zustand befindet,
- Fig. 4: schematischer Querschnitt durch die Haltevorrichtung gemäß Fig. 3 mit einem ersten Ausführungsbeispiel einer Arretiereinrichtung,
- Fig. 5: schematischer Querschnitt durch die Haltevorrichtung gemäß Fig. 4 im entspannten Zustand,
- Fig. 6: schematischer Querschnitt durch die Haltevorrichtung gemäß Fig. 3 mit einem zweiten Ausführungsbeispiel einer Arretiereinrichtung im gespannten Zustand und
- Fig. 7: schematischer Querschnitt durch die Haltevorrichtung gemäß Fig. 6 im entspannten Zustand.

### WEGE ZUM AUSFÜHREN DER ERFINDUNG

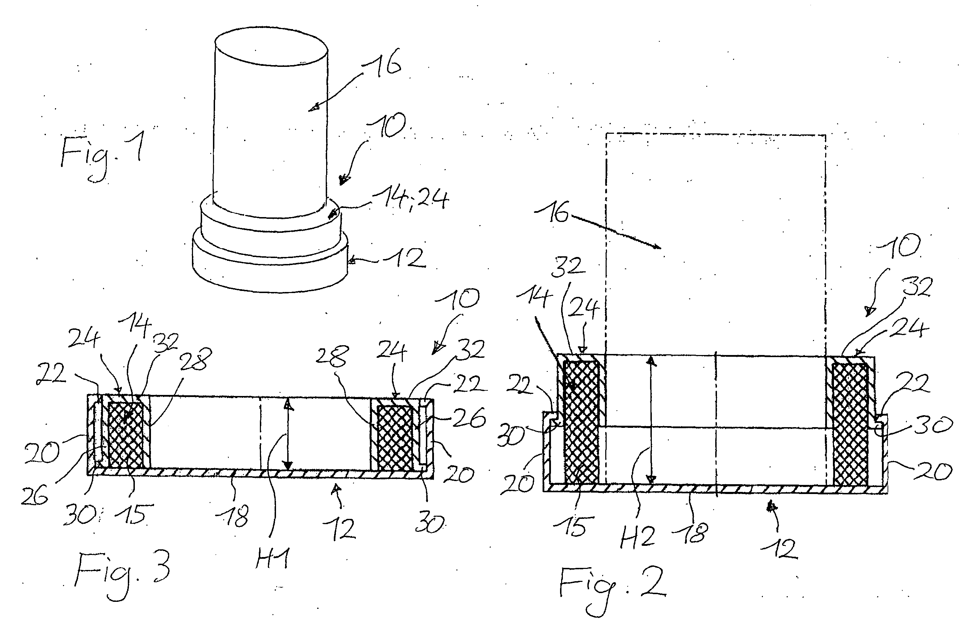

In Fig. 1 ist schematisch in einer Perspektive eine Haltevorrichtung 10 dargestellt, in die ein Gegenstand 16, zum Beispiel eine Getränkedose, lösbar fixiert eingestellt ist. Die Haltevorrichtung 10 weist eine Basiseinrichtung 12 auf, die insgesamt rotationssymmetrisch ausgebildet ist. Die Basiseinrichtung 12 besitzt eine kreisscheibenförmige Basisplatte 18, an die in ihrem Außenbereich ein nach oben weisender Basisflansch 20 angeformt ist. An den Basisflansch 20 ist in dessen oberen freien Endbereich eine nach innen weisende umlaufende Innenvorsprungeinheit 22 angeformt.

Bei eingesetztem Gegenstand 16 ist dieser auf der Basisplatte 18 gelagert.

Innerhalb der Baiseinrichtung 12 ist eine Fixiereinrichtung 14 vorhanden, die eine Ringkörperstruktur aufweist, deren Innenkontur an der Außenkontur des eingesetzten Gegenstands anliegt.

Die Fixiereinrichtung 14 besitzt eine ringförmige elastische Einheit 15, die im Ausführungsbeispiel als Schaumkörper ausgebildet ist. In Fig. 2 ist die elastische Einheit 15 im entspannten Zustand dargestellt, das heißt sie besitzt eine Höhe H2, die die Fixierhöhe des eingesetzten Gegenstands 16 darstellt, wobei durch diese erhöhte Fixierhöhe eine sichere lösbare Fixierung des eingesetzten Gegenstands 16 gewährleistet wird.

Neben der elastischen Einheit 15 besitzt die Fixiereinrichtung 14 ein Aufnahmeprofil 24, das im Querschnitt U-förmig mit einem nach unten weisenden Profilaußenflansch 26 und Profilinnenflansch 28 und einen die beiden Flansche 26, 28 verbindenden Profilboden 32 aufweist.

Die lichten Innenmaße des Aufnahmeprofils 24 sind so ausgebildet, dass der Innenprofilraum des Aufnahmeprofils 24 im gespannten Zustand, das heißt im zusammengedrückten Zustand, der elastischen Einheit 15 vollständig ausgefüllt ist (siehe Fig. 3).

An dem Profilaußenflansch 26 ist in dessen unteren freien Endbereich eine nach außen weisende Außenvorsprungeinheit 30 angeformt, die im entspannten Zustand der elastischen Einheit 15 (siehe Fig. 2) mit der Innenvorsprungeinheit 22 des Basisflansches 20 zum Anschlag kommt, wodurch die Fixierhöhe H2 eindeutig definiert wird.

Sowohl das Aufnahmeprofil 24 als auch die Basiseinrichtung 12 sind als rotationssymmetrisch gespritzte Kunststoffteile ausgebildet.

Die vergrößerte Fixierhöhe H2 wird somit dadurch erzielt, dass die werkstoffbedingte elastische gedämpfte Rückstellung der elastischen Einheit 15 ausgenutzt wird, ohne das weitere zusätzliche Federteile oder sonstige bewegliche Teile benötigt werden.

Die Höhe H1 der Flansche 26, 28 des Aufnahmeprofils 24 sind dabei so ausgebildet, dass sie der lichten Innenhöhe der Basiseinrichtung 12 entsprechen, das heißt, dass das Aufnahmeprofil 24 mit seinem oberseitig angeordneten Profilboden 32 und mit der Innenvorsprungeinheit 22 der Basiseinrichtung 12 eine gemeinsame obere Abschlusskante bei gespannter Fixiereinrichtung 14 gemäß Fig. 3 bilden. Somit ragt das Aufnahmeprofil 24 mit der im Inneren angeordneten elastischen Einheit 15 nicht über die Basiseinrichtung 12 im gespannten Zustand hinaus. Dadurch lässt sich für die Haltevorrichtung 10 im "nicht benötigten" gespannten Zustand ein kompaktes Einbauvolumen erzielen.

Weiterhin sind in den Fig. nicht näher dargestellte Mittel zum lösbaren Arretieren der Fixiereinrichtung 14 vorhanden, die einerseits die Fixiereinrichtung 14 im gespannten Zustand gemäß Fig. 3 halten und, sobald der Gegenstand 16 eingesetzt wird, die Fixiereinrichtung 14 freigeben, so dass diese aufgrund der elastischen Rückstellkräfte der elastischen Einheit 15 sich entspannt und den in Fig. 2 dargestellten Zustand mit vergrößerter Fixierhöhe H2 einnimmt.

Durch die Ausbildung der Fixiereinrichtung 14 als deformierbarer Block, der sich nach Entlastung in seine Originaldimension zurückstellt, wird ein einfaches System zur Fixierung zur Verfügung gestellt, bei dem auf aufwendige Einzelteile und störanfällige kinematische Systeme vollständig verzichtet werden kann, so dass sowohl eine kostengünstige Herstellung ermöglicht wird als auch eine zuverlässige lösbare Fixierung des eingestellten Gegenstandes gewährleistet wird.

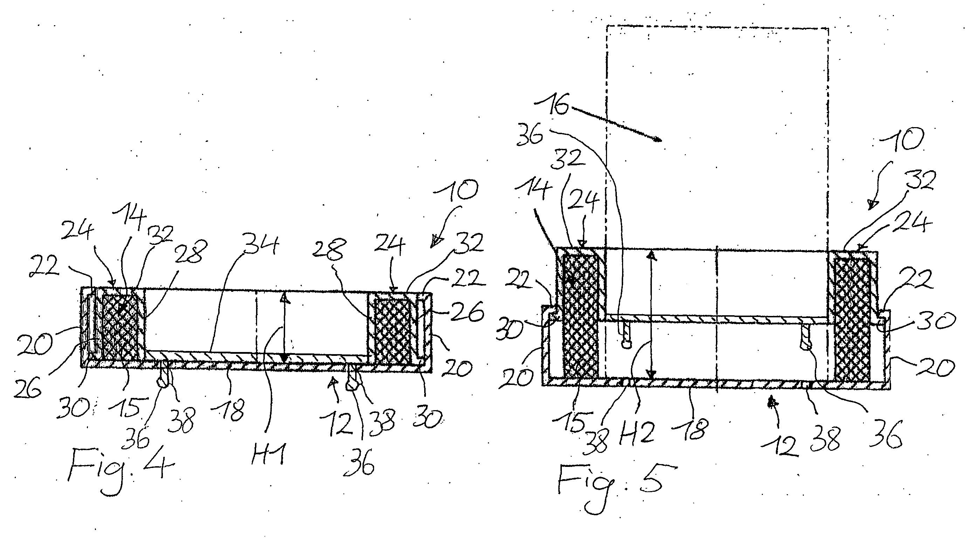

Die in den Fig. 4 bis 7 dargestellten Haltevorrichtungen 10 unterscheiden sich von der oben beschriebenen Haltevorrichtung 10 lediglich darin, dass ergänzend Arretiereinrichtungen zum lösbaren Arretieren der Haltevorrichtung im gespannten Zustand vorhanden sind. Gleiche Bauteile tragen das selbe Bezugszeichen und werden nicht nochmals erläutert.

An den Innenflanschen 28 des Aufnahmeprofils 24 ist im unteren Stirnendbereich eine kreisscheibenförmige Platteneinheit 34 angeformt. Die Platteneinheit 34 kann auch als Steg ausgebildet sein. An die Platteneinheit 34 sind zwei beabstandet angeordnete, nach unten weisende Vorsprungeinheiten 36 angeformt, die in ihrem Endbereich eine Querschnittsverdickung aufweisen. Die Vorspungeinheiten 36 können mit entsprechendem in der Basisplatte 18 vorhandenen Ausnehmungen 38 lösbar in Eingriff gebracht werden. Die Eingriffsposition ist in Fig. 4 dargestellt. In dieser Position wird das Aufnahmeprofil 24 mit elastischer Einheit 15 entgegen der Wirkung der elastischen Einheit 15 im gespannten Zustand arretiert. Nach dem Lösen der Arretierung entspannt sich die elastische Einheit 15 und nimmt die in Fig. 5 dargestellte Position ein.

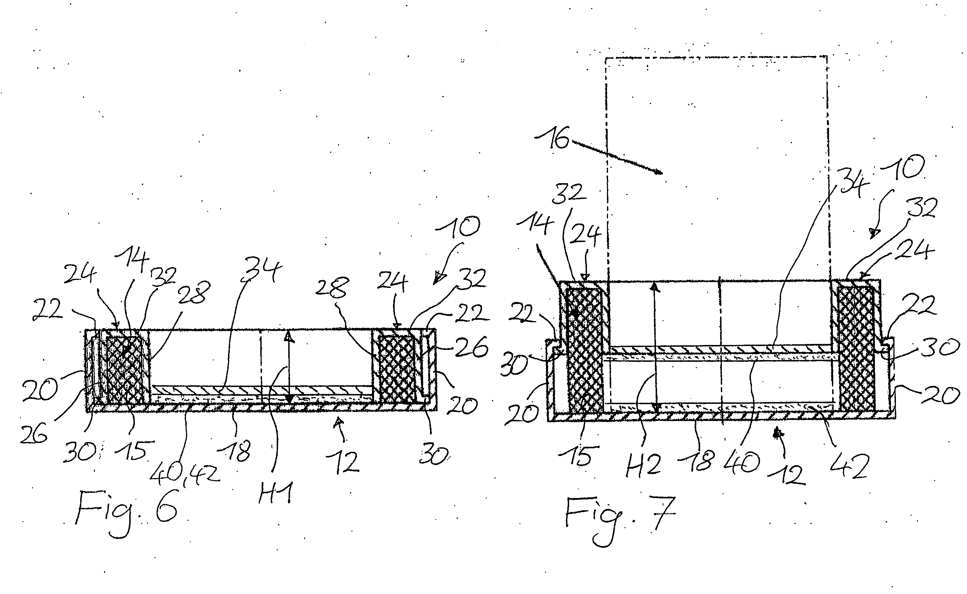

Bei dem Ausführungsbeispiel der Haltevorrichtung gemäß den Fig. 6 und 7 ist eine zweite Ausführungsvariante einer Arretiereinrichtung dargestellt. Die Arretiereinrichtung besteht aus einer unterseitig an der Platte 34 vorhandenen ersten Klettverschlusseinheit 40 und einer oberseitig auf der Basisplatte 18 vorhandenen zweiten Klettverschlusseinheit 42. Im gespannten Zustand der elastischen Einheit 15 (Fig. 6) greifen beide Klettverschlusseinheiten 40, 42 ineinander. Der entspannte Zustand der elastischen Einheit 15 ist in Fig. 7 dargestellt.

## Patentansprüche

1. Haltevorrichtung (10) zum lösbaren Halten von Gegenständen (16), insbesondere Cupholder für Fahrzeuginnenräume, mit einer Basiseinrichtung (12), auf der der Gegenstand (16) abstellbar ist, und einer Fixiereinrichtung (14), die den auf der Basiseinrichtung (12) abgestellten Gegenstand (16) in dessen unteren Bereich lösbar fixiert, indem zumindest bereichsweise eine Innenkontur der Fixiereinrichtung (14) vorhanden ist, die an der Außenkontur des Gegenstands (16) anliegt,
**dadurch gekennzeichnet, dass**
- die Fixiereinrichtung (14) eine elastische Einheit (15) aufweist, die von einem gespannten Zustand in einen entspannten Zustand überführbar ist, wobei die Fixierhöhe (H2) und damit die Anlagefläche der Fixiereinrichtung (14) an den eingesetzten Gegenstand (16) im entspannten Zustand der Fixiereinrichtung (14) größer ist als die Höhe (H1) der Fixiereinrichtung (14) im gespannten Zustand.

2. Haltevorrichtung nach Anspruch 1,
**dadurch gekennzeichnet, dass**
- die elastische Einheit (15) als Schaumstoffkörper ausgebildet ist.

3. Haltevorrichtung nach Anspruch 1 oder 2,
**dadurch gekennzeichnet, dass**
- die elastische Einheit (15) als Ringkörper ausgebildet ist.

4. Haltevorrichtung nach einem oder mehreren der vorstehenden Ansprüche,
**dadurch gekennzeichnet, dass**
- Mittel zum lösbaren Arretieren der Fixiereinrichtung (14) im gespannten Zustand vorhanden sind.

5. Haltevorrichtung nach einem oder mehreren der vorstehenden Ansprüche,
**dadurch gekennzeichnet, dass**
- Anschlagmittel (22, 30) vorhanden sind, die die Fixierhöhe (H2) im entspannten Zustand der Fixiereinrichtung (14) begrenzen.

6. Haltevorrichtung nach einem oder mehreren der vorstehenden Ansprüche,
**dadurch gekennzeichnet, dass**
- die Fixiereinrichtung (14) ein im Querschnitt U-förmiges Aufnahmeprofil (24) mit einem nach unten weisenden Außen- und Innenflansch (26, 28) aufweist und die elastische Einheit (15) im gespannten Zustand im Wesentlichen vollständig im Inneren des U-förmigen Aufnahmeprofils (24) vorhanden ist.

7. Haltevorrichtung nach Anspruch 6,
**dadurch gekennzeichnet, dass**
- das Aufnahmeprofil (24) an seinem Außenflansch (26) in dessen unteren freien Endbereich einen nach außen weisende Vorsprungeinheit (30) aufweist, die mit einer an der Basiseinrichtung (12) vorhandenen Innenvorsprungeinheit (22) im entspannten Zustand der elastischen Einheit (15) zur Begrenzung der Fixierhöhe (H2) zum Anschlag kommt.

8. Haltevorrichtung nach einem oder mehreren der vorstehenden Ansprüche,
**dadurch gekennzeichnet, dass**
- die Basiseinrichtung (12) einen U-förmigen Querschnitt mit einem nach oben weisenden Basisflansch (20) aufweist und im oberen Endbereich des Basisflansches (20) eine Innenvorsprungeinheit (22) angeordnet ist.

9. Haltevorrichtung nach einem oder mehreren der vorstehenden Ansprüche,
**dadurch gekennzeichnet, dass**
- die lichte Innenhöhe der Basiseinrichtung (12) im Wesentlichen der Höhe der Fixiereinrichtung (14) im gespannten Zustand entspricht.

10. Haltevorrichtung nach einem oder mehreren der vorstehenden Ansprüche,
**dadurch gekennzeichnet, dass**
- die Basiseinrichtung (12) und die Fixiereinrichtung (14) als rotationssymmetrische Bauteile ausgebildet sind.

11. Haltevorrichtung nach einem oder mehreren der Ansprüche 6 bis 10,
**dadurch gekennzeichnet, dass**
- das Aufnahmeprofil (24) und die Basiseinrichtung (12) jeweils als Kunststoffspritzteil ausgebildet sind.

12. Haltevorrichtung nach Anspruch 11,
**dadurch gekennzeichnet, dass**
- die Innenvorsprungeinheit (22) einstückig an die Basiseinrichtung (12) und die Außenvorsprungeinheit (30) einstückig an das Aufnahmeprofil (24) angeformt sind.

13. Haltevorrichtung nach Anspruch 4,
**dadurch gekennzeichnet, dass**
- die Mittel zum lösbaren Arretieren zumindest einen Drehriegel aufweisen.

14. Haltevorrichtung nach Anspruch 4,
**dadurch gekennzeichnet, dass**
- die Mittel zum lösbaren Arretieren als sogenannte Push-Push-Verriegelung ausgebildet sind.

15. Haltevorrichtung nach Anspruch 4,
**dadurch gekennzeichnet, dass**
- die Mittel zum lösbaren Arretieren als Kelttverschluss ausgebildet sind.

16. Haltevorrichtung nach Anspruch 1,
**dadurch gekennzeichnet, dass**
- die elastische Einheit aus elastischem Thermoplast-Material besteht.

17. Haltevorrichtung nach Anspruch 1,
**dadurch gekennzeichnet, dass**
- die elastische Einheit als Faltenbalg ausgebildet ist.

18. Haltevorrichtung nach Anspruch 1,
**dadurch gekennzeichnet, dass**
- die elastische Einheit als Lamellenkörper ausgebildet ist.

19. Haltevorrichtung nach einem oder mehreren der Ansprüche 6 bis 18,
**dadurch gekennzeichnet, dass**
- das Aufnahmeprofil (24) und die elastische Einheit (15) als ein 2-Komponenten-Spritzgussteil ausgebildet sind.
